# EUROPÄISCHE PATENTSCHRIFT

(11) **EP 0 771 957 B1**
(45) Veröffentlichungstag und Bekanntmachung des Hinweises auf die Patenterteilung: **31.05.2000**
(21) Anmeldenummer: 96116128.8
(22) Anmeldetag: 09.10.1996
(51) Int. Cl.: F16C 17/22

(54) **Gleitlagerung für eine Maschinenwelle**
Slide bearing for an engine shaft
Palier à glissement pour un arbre-machine

(30) Priorität: 06.11.1995 DE 19541245
(43) Veröffentlichungstag der Anmeldung: 07.05.1997
(73) Patentinhaber: KSB Aktiengesellschaft, 67227 Frankenthal (DE)
(72) Erfinder: Graf, Ernst, 91275 Auerbach (DE); Radke, Michael, Dr., 14089 Berlin (DE)

(56) Entgegenhaltungen:
- EP-A- 0 264 661
- CH-A- 383 084
- DE-A- 2 000 601
- DE-U- 8 915 546
- FR-A- 1 343 721
- US-A- 3 106 432

## Beschreibung

Gegenstand der Erfindung ist eine Gleitlagerung für eine Maschinenwelle gemäß den Oberbegriff des Anspruchs 1.

Gleitlagerungen werden in verschiedenen Gebieten des Maschinenbaus eingesetzt. In Spaltrohrmotorpumpen, bei denen der Rotor vollständig vom Fördermedium umgeben ist, gehören Gleitlagerungen zu den notwendigen Bestandteilen.

An die Befestigung von Lagerhülsen auf Wellen werden konkurrierende Anforderungen gestellt: Einerseits ist ein einwandfreier und dauerhafter Kraftschluß zwischen der Lagerhülse und der Welle sowie ein konstantes Spiel zwischen der Lagerhülse und der Lagerbuchse sicherzustellen, andererseits soll ein einfacher Austausch der Lagerhülsen ohne aufwendige Vorrichtungen möglich sein.

Bedingt durch die vielfältigen Anwendungsfälle von Spaltrohrmotorpumpen in der Industrie- und Verfahrenstechnik, kommt daher sowohl der Werkstoffauswahl für die Lagerbuchsen und -hülsen als auch der Befestigung dieser Bauteile eine grundlegende Bedeutung für die Betriebssicherheit zu. Die Werkstoffauswahl erfolgt hauptsächlich im Hinblick auf günstige Gleiteigenschaften, hohe Verschleißfestigkeit, gute Korrosionsbeständigkeit und gute Trockenlaufeigenschaften.

Die Verwendung von den genannten Anforderungen entsprechenden Werkstoffen, die im Vergleich zu Stahl wesentlich niedrigere Ausdehnungskoeffizienten aufweisen, führt in der Praxis zu Problemen im Zusammenhang mit der Befestigung der rotierenden Lagerhülsen auf der Welle, insbesondere wenn der Rotor der Spaltrohrmotorpumpe Betriebstemperaturen von über 150 °C ausgesetzt wird. So ergeben sich bei den häufig im Pumpenbau eingesetzten Metall-Keramik-Verbindungen mit einem Verhältnis der Ausdehnungskoeffizienten von 4:1 bei einer Erhöhung der Betriebstemperatur um ca. 200 °C Dehnungsdifferenzen von mehr als 1/10 mm. Eine auch bei hohen Betriebstemperaturen sichere, allein als Preßverbindung ausgelegte kraftschlüssige Metall-Keramik-Verbindung würde eine Auslegung mit großen Übermaßen bei Raumtemperatur erfordern. Eine solche Preßverbindung würde aber im Normalfall die zulässige elastische Verformungsgrenze aller verwendbaren Stähle überschreiten. Dies bedeutet, daß eine kraftschlüssige Verbindung zwischen Metall und Keramik über einen größeren Temperaturbereich nur mit Hilfe ausgleichender Elemente aufrechterhalten werden kann. Erschwerend wirkt sich hierbei aus, daß Keramikbauteile zwar einem hohen Druck ausgesetzt werden können, daß sie aber höheren Zugspannungen nicht standhalten.

Aus der DE 20 00 601 A1 ist bereits eine Gleitlagerung der obengenannten Art bekannt, bei der die Ausdehnungskoeffizienten von Lager- und Wellenmaterial stark voneinander abweichen. Es wird die Lösung des Problems angestrebt, trotz unterschiedlicher Ausdehnung und Kontraktion von Welle und Lager ein im wesentlichen konstantes Lagerspiel zwischen Welle und Lager aufrechtzuerhalten. Die Lösung wird im wesentlichen darin gesehen, daß die Lagerhülse in einem Axialschnitt die Gestalt eines geraden Kreiskegelstumpfes besitzt, dessen Spitze auf der Längsachse der Welle liegt, und daß die Lagerhülse in einer ringförmigen Ausnehmung der Welle liegt, die eine komplementäre Gestalt besitzt. Der Neigungswinkel der Kegelstumpfflächen soll dabei so gewählt werden, daß bei Ausdehnung der Welle relativ zur Hülse die auf die Kegelstumpfflächen wirkenden Klemmkräfte im wesentlichen konstant bleiben. Da ein Dehnungsausgleich hier nicht vorgesehen ist, muß allerdings bei einer Anwendung in einem größeren Temperaturbereich mit einem Auftreten unzulässig hoher Zugspannungen und einer Zerstörung der Lagerhülse gerechnet werden.

Durch die EP 0 264 661 A2 ist auch schon eine der eingangs genannten Gattung entsprechende Gleitlagerung bekannt, bei der dem Problem der unterschiedlichen Wärmeausdehnung von Welle und Lagerhülse mit Dehnungsausgleichselementen begegnet wird. Die ohne radiales Spiel auf der Welle angeordnete und dort mittels Halteringen befestigte Lagerhülse ist durch Längsteilung in mehrere Segmente aufgegliedert. Zwischen den einzelnen Segmenten sowie zwischen den Enden der Lagerhülse und den Halteringen sind jeweils aus Memory-Metall bestehende Dehnungsausgleichselemente vorgesehen. Eine solche Konstruktion ist sehr aufwendig; wegen der Einhaltung der erforderlichen engen Toleranzen ist sie fertigungstechnisch schwer realisierbar. Im übrigen steht die Aufgliederung in viele Einzelelemente der Forderung nach einer einfachen Montage entgegen. Am schwersten wiegt aber der Umstand, daß die für Memory-Metalle verwendeten Legierungen eine stark eingeschränkte Korrosionsbeständigkeit besitzen, und daher für den Einsatz in Spaltrohrmotorpumpen ungeeignet sind.

Der Erfindung liegt die Aufgabe zugrunde, eine insbesondere in Spaltrohrmotorpumpen einsetzbare Gleitlagerung zu schaffen, die einen geringen Aufwand für Fertigung und Montage notwendig macht und die über einen großen Temperaturbereich eine hohe Betriebssicherheit gewährleistet.

Ausgehend von einer Gleitlagerung der eingangs genannten Art, wird diese Aufgabe erfindungsgemäß durch die Merkmale im kennzeichnender Teil des Anspruchs 1 gelöst.

Der Gegenstand der Erfindung zeichnet sich vor allem dadurch aus, daß die Lagerhülse nur geringen Ansprüchen an die Zugfestigkeit des Materials genügen muß. Aufgrund des vorgegebenen radialen Spiels der Lagerhülse zur Welle wirken sich Dehnungen der Welle nicht auf die Lagerhülse aus. Über die Konusflächen an Lagerhülse und Halteringen wird eine über einen weiten Temperaturbereich präzise radiale Zentrierung der Lagerhülse gewährleistet, so daß stets ein konstantes Spiel zwischen Lagerhülse und -buchse vorliegt. Die Halteringe üben dabei eine reine Druckbeanspruchung auf die Lagerhülse aus. Zugbeanspruchungen werden vermieden.

Die bei einem Temperaturanstieg unterschiedliche Längendehnung von Welle, Lagerhülse und Halteringen würde bei fehlendem Ausgleich zu einem sich mit steigender Temperatur vergrößernden Spalt zwischen Lagerhülse und Halterung führen. Durch das zwischen dem Haltering und der axialen Befestigung angeordnete federnde Element wird jedoch eine axiale Kraft ausgeübt, durch die der Haltering auf der Welle verschoben wird. Die Spalte an den Konusflächen werden aufgehoben, die kraftschlüssige Verbindung zwischen den Halteringen und der Lagerhülse bleibt erhalten. Dieser durch die Dimensionierung der Konusflächen und des federnden Elements zu definierende Ausgleich ist über einen weiten Temperaturbereich einsetzbar.

Der fertigungs- und montagetechnische Aufwand sind bei der erfindungsgemäßen Gleitlagerung vergleichsweise gering.

Bevorzugtes Anwendungsgebiet der Erfindung ist die Gleitlagerung für Rotoren von Spaltrohrmotorpumpen. Hier werden vor allem Lagerhülsen und -buchsen aus keramischen Materialien eingesetzt. Die Erfindung ist in ihrer Anwendung aber nicht auf das genannte Gebiet beschränkt, vielmehr kann sie auch bei konventionellen Gleitlagerungen mit Lagerhülsen aus gehärtetem Stahl und Lagerbuchsen aus Kohle eingesetzt werden.

Die Unteransprüche nennen vorteilhafte Ausgestaltungen der Erfindung:

Eine für eine einwandfreie Funktion der erfindungsgemäßen Gleitlagerung optimale Ausführung wird erzielt, wenn der zur Wellenachse gebildete Winkel einer Konusfläche zwischen 30 ° und 60 ° liegt.

Um mit der Gleitlagerung sowohl eine radiale als auch eine axiale Fixierung der Welle zu erreichen, wird vorgeschlagen, daß die feststehende Lagerbuchse zusätzlich zur radialen Gleitlagerfläche zwei axiale Gleitlagerflächen besitzt, während die Halteringe eine maximal bis zum äußeren Rand der Lagerbuchse reichende radiale Erstreckung aufweisen und mit axialen Gleitlagerflächen ausgestattet sind, die mit der axialen Gleitlagerfläche der Lagerbuchse korrespondieren.

Hierbei kann die axiale Gleitlagerfläche eines Halterings durch einen separaten, in den Haltering integrierten Axiallagerring gebildet werden, was auch an dieser Stelle den Einsatz eines optimalen Gleitlagerwerkstoffes erlaubt.

Um eine sichere Befestigung der feststehenden Lagerbuchse und der Axiallagerringe auch bei hohen Temperaturen zu gewährleisten, wird angeregt, diese Teile durch radial angeordnete Federelemente, z. B. durch Wellfedern oder Toleranzringe zu fixieren.

Eine weitere vorteilhafte Ausgestaltung der Erfindung sieht vor, daß der Axiallagerring winkelverstellbar gehaltert ist, wobei der Axiallagerring durch eine im Haltering angeordnete Feder axial belastet und durch eine durch Umformen des Randes des Halteringes erzeugte Bördelung im Haltering fixiert wird.

Im übrigen ist es von Vorteil, wenn in jedem Haltering eine oder mehrere Bohrungen angeordnet sind, welche eine Verbindung herstellen zwischen dem mit Fluid gefüllten Raum im Bereich der Gleitlagerflächen und einer am inneren Radius des Halteringes umlaufenden Nut, die ihrerseits eine oder mehrere in der Welle angeordnete Bohrungen umschließt, welche in eine zum Pumpenraum der Spaltrohrmotorpumpe führende Axialbohrung münden. Hierdurch ergibt sich eine definierte, radial nach innen gerichtete Kühlstromführung durch die Gleitlager und eine Abfuhr evtl. vorhandener Gasblasen.

Als federnde Elemente werden bevorzugt Tellerfedern verwendet. Die feststehende Lagerbuchse, die rotierende Lagerhülse und die in den Halteringen installierten Axiallagerringe bestehen vorzugsweise aus keramischen Werkstoffen, insbesondere aus Siliziumcarbid. Alternativ hierzu wird vorgeschlagen, daß die feststehende Lagerbuchse aus Kohle und die rotierende Lagerhülse sowie die Halteringe aus gehärtetem Stahl oder hartmetall-/keramikbeschichtetem Stahl bestehen.

Anhand mehrerer Ausführungsbeispiele wird die Erfindung näher erläutert. Die Zeichnung zeigt in Schnittdarstellungen mehrere Ausführungen der erfindungsgemäßen Gleitlagerung. Es zeigen:
- Fig. 1: eine Spaltrohrmotorpumpe mit einer zweifachen Radiallagerung,
- Fig. 2: eine erfindungsgemäß aufgebaute Gleitlagerung zur radialen Positionierung einer Rotorwelle,
- Fig. 3: eine Gleitlagerung zur radialen und axialen Positionierung einer Rotorwelle,
- Fig. 4: eine Gleitlagerung zur radialen und axialen Positionierung einer Rotorwelle mit zusätzlichen Befestigungsringen für die Axiallagerringe und die Lagerbuchse,
- Fig. 5: eine Gleitlagerung zur radialen und axialen Positionierung einer Rotorwelle mit winkelverstellbaren Axiallagerringen,
- Fig. 6: eine Gleitlagerung zur radialen und axialen Positionierung einer Rotorwelle mit einer in der Gleitlagerung angeordneten Kühlstromführung und Gasabführung.

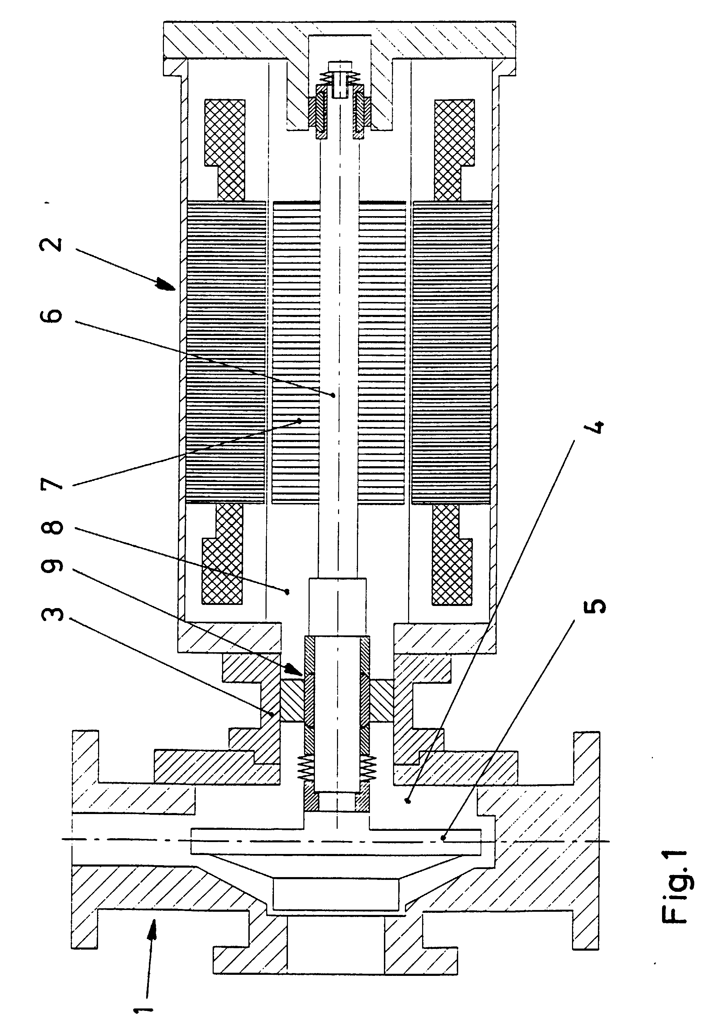

Die in der Fig. 1 dargestellte Spaltrohrmotorpumpe besteht im wesentlichen aus einem Pumpenteil 1, einem Motorteil 2 und einer die beiden miteinander verbindenden Laterne 3. Ein in einer Pumpenkammer 4 angeordnetes Laufrad 5 ist befestigt auf einer Welle 6, die außerdem noch den Rotor 7 des Elektromotors 2 trägt. Zwischen dem Rotorraum 8 des Elektromotors 2 und der Pumpenkammer 4 besteht eine Verbindung, so daß der Rotorraum 8 vollständig mit Förderflüssigkeit gefüllt ist. Zur Atmosphäre hin ist das aus Pumpe 1 und Elektromotor 2 bestehende Aggregat hermetisch abgedichtet.

Die Welle 6 wird von zwei verschiedenen Gleitlagerungen getragen: einer in der Laterne 3 angeordneten Gleitlagerung 9 und einer im Gehäuse 10 des Elektromotors 2 angeordneten Gleitlagerung 11. Beide Gleitlagerungen 9, 11 dienen der radialen Positionierung der Welle 6, sie werden geschmiert und gekühlt durch das im Rotorraum 8 befindliche Fördermedium.

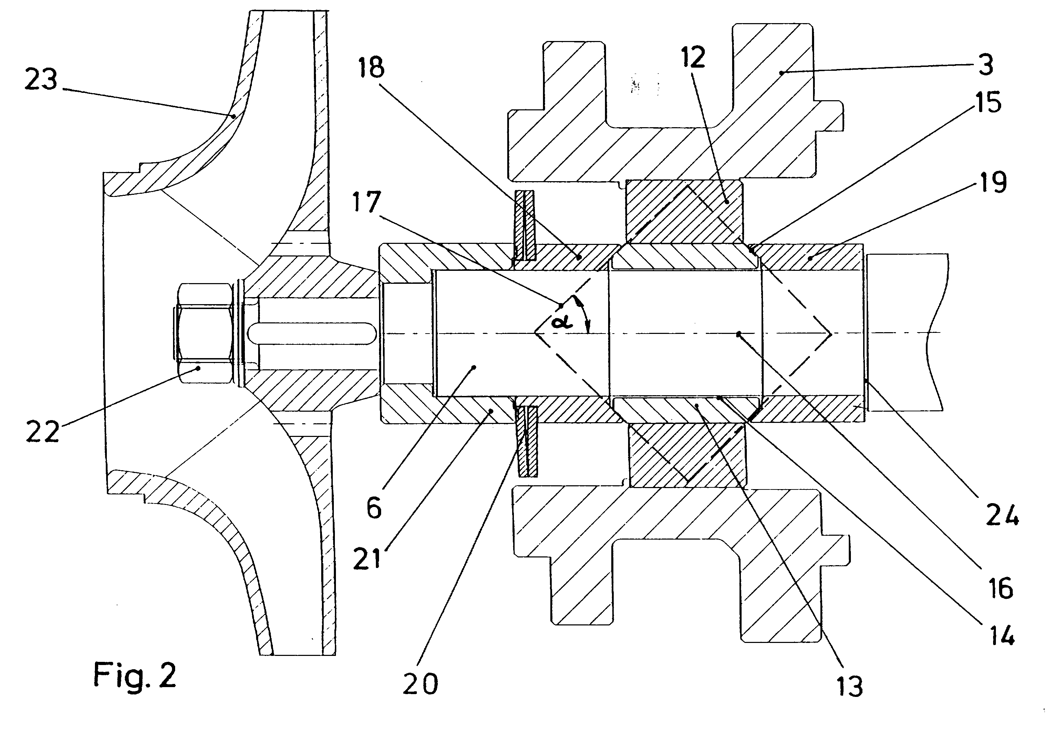

In den Ausführungsbeispielen der Fig. 2 bis 6 sind ausschließlich in der Laterne 3 angeordnete Gleitlagerungen dargestellt. Ihre konstruktive Gestaltung ist zwar an die örtlichen Gegebenheiten angepaßt, sie kann aber für einen Einbau am pumpenfernen Ende leicht modifiziert werden.

In der Fig. 2 ist eine Gleitlagerung dargestellt, die im wesentlichen der Gleitlagerung 9 der Fig. 1 entspricht. Sie umfaßt eine in die Laterne 3 eingepreßte feststehende Lagerbuchse 12 und eine mit der Welle 6 rotierende Lagerhülse 13. Zwischen der Lagerhülse 13 und der Welle 6 ist ein radiales Spiel 14 vorgesehen, das bei sich ändernden Temperaturen unterschiedliche Durchmesserdehnungen der Lagerhülse 13 und der Welle 6 zuläßt. Damit wird der Einsatz von Werkstoffen mit stark unterschiedlichen Ausdehnungskoeffizienten für die Welle 6 und die Lagerhülse 13 ermöglicht. Vorzugsweise werden die Lagerbuchse 12 und die Lagerhülse 13 aus keramischen Werkstoffen und die Welle 6 aus austenitischem Stahl gefertigt.

Die Stirnflächen der Lagerhülse 13 sind als Konusflächen 15 ausgebildet. Die Lagerhülse 13 besitzt also an jeder Stirnseite die Gestalt eines geraden Kreiskegelstumpfes, dessen imaginäre Spitze auf der Längsachse 16 der Welle 6 liegt, wobei die gedachten Verbindungslinien 17 eine Raute bilden. Eine für eine einwandfreie Funktion der Gleitlagerung optimale Ausführung der Konusflächen 15 ist gegeben, wenn der zwischen der Linie 17 und der Wellenachse 16 gebildete Winkel α zwischen 30 ° und 60 ° beträgt.

Durch zwei Halteringe 18, 19 wird die Lagerhülse 13 radial und axial auf der Welle 6 zentriert. Die Halteringe 18, 19 sind mit einem engen Schiebesitz auf der Welle 6 zentriert. Auf ihren der Lagerhülse 13 zugewandten Stirnseiten besitzen sie zu den Konusflächen 15 komplementäre Flächen.

Durch ein aus zwei Tellerfedern bestehendes Element 20 wird der Haltering 18 mit einer axial in Richtung der Lagerhülse 13 wirkenden Kraft beaufschlagt. Das federnde Element 20 stützt sich an einer axialen Befestigung ab, die durch eine Buchse 21 gebildet wird. Die Position der Buchse 21 ist festgelegt durch eine auf die Welle 6 aufgeschraubte Mutter 22, die wiederum der Befestigung eines zwischen der Buchse 21 und der Mutter 22 angeordneten Laufrades 23 dient. Der gesamte aus den Halteringen 18, 19, der Lagerhülse 13, dem federnden Element 20, der Buchse 21, dem Laufrad 23 und der Mutter 22 gebildete Längsverbund ist gegen einen auf der Welle 6 angeordneten Bund 24 verspannt.

Wird der bei Umgebungstemperatur montierte Längsverbund einer steigenden Temperatur ausgesetzt, dehnen sich die in dem Längsverbund befindlichen Teile aufgrund ihrer unterschiedlichen Wärmeausdehnungskoeffizienten verschieden stark aus. Während die Lagerbuchse 12 und die Lagerhülse 13, die vorzugsweise aus Keramikmaterialien bestehen, nur eine vergleichsweise geringe Dehnung erfahren, werden die übrigen, aus Metall bestehenden Teile je nach dem für sie gültigen Ausdehnungskoeffizienten mehr oder weniger stark gedehnt. Durch die erfindungsgemäße Anordnung der Gleitlagerung werden aber sämtliche sich ergebenden Änderungen in den Maßverhältnissen der miteinander verbundenen Teile kompensiert:

Die im Vergleich zur Lagerhülse 13 größere Dehnung des Durchmessers der Welle 6 wird innerhalb des Spaltes 14 aufgenommen. Der Spalt 14 ist so bemessen, daß er die größtmögliche Durchmesserdehnung der Welle 6 innerhalb des in Frage kommenden Temperaturbereichs der Spaltrohrmotorpumpe zu überbrücken vermag.

Die größere Längen- und Durchmesserdehnung der metallischen Halteringe 18, 19, die größere Längendehnung der Welle 6 und die geringere Längendehnung der Lagerhülse 13 würden bei einem fehlenden Längenausgleich zu Spalten an den Konusflächen 15 führen. Die durch das federnde Element 20 ausgeübte, in axialer Richtung wirkende Kraft verschiebt aber den Haltering 18, die Lagerhülse 13 und den Haltering 19 in Richtung des Wellenbundes 24. Diese Axialverschiebung wird beendet, wenn die durch das federnde Element 20 ausgeübte Kraft der Gegenkraft im Längsverbund der verschiedenen axial aneinander anliegenden Teile entspricht. Dies bedeutet, daß kein Spalt zwischen diesen Teilen mehr vorhanden sein kann, daß also die Lagerhülse 13 kraftschlüssig zwischen den Halteringen 18, 19 eingespannt ist.

Bei einer Absenkung der Temperatur im Rotorraum 8 würde bei einem fehlenden Ausgleich die Lagerhülse 13 von den Halteringen 18, 19 mit einer ansteigenden Axialkraft beaufschlagt. Da aber hier ein Längenausgleich über ein Zusammendrücken des federnden Elements 20 vorgenommen wird, wird auch der bei einer Temperatursenkung erfolgende Prozeß kompensiert. Weil der Ausgleichsvorgang jeweils fließend und gleichzeitig mit einer Temperaturänderung erfolgt, bleibt die kraftschlüssige Verbindung der Halteringe 18, 19 mit der Lagerhülse 13 während eines alle Temperaturbereiche durchlaufenden Betriebes der Spaltrohrmotorpumpe erhalten.

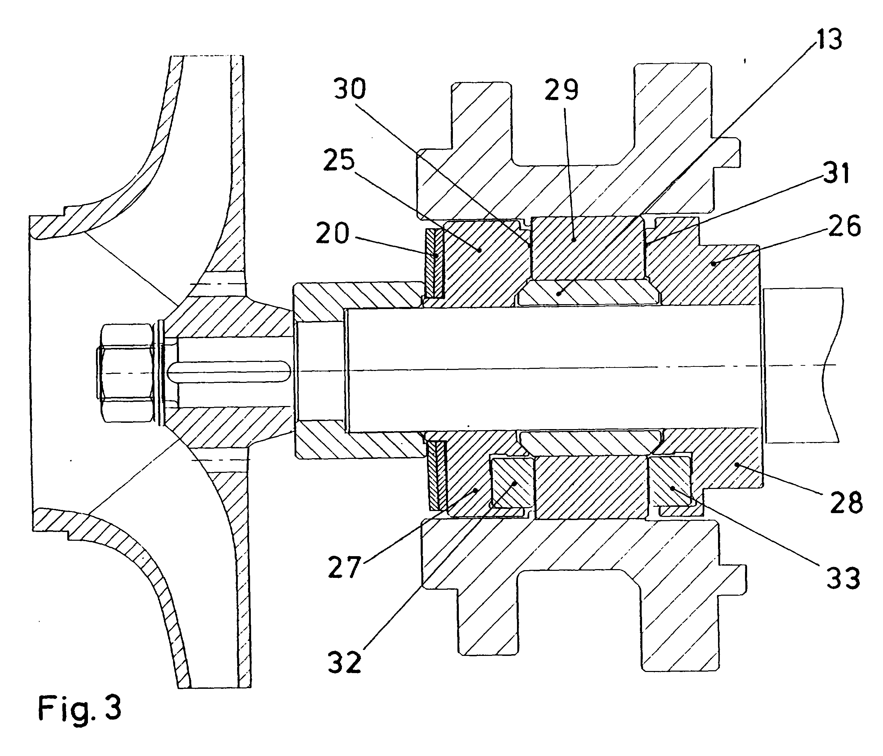

Im Gegensatz zu der in Fig. 2 dargestellten Gleitlageranordnung, die lediglich eine radiale Positionierung der Welle 6 gewährleistet, wird durch die in Fig. 3 in zwei alternativen Ausführungen dargestellte Gleitlageranordnung sowohl eine radiale als auch eine axiale Positionierung der Welle 6 erreicht. Dies wird im wesentlichen dadurch ermöglicht, daß die Halteringe 25, 26 bzw. 27, 28 eine vergrößerte radiale Erstreckung besitzen und mit der Lagerbuchse 29 axiale Gleitlagerflächen bilden. Die im oberen Teil der Figur 3 dargestellten Halteringe 25, 26 verfügen über Stirnflächen 30, 31, die mit den Stirnflächen der Lagerbuchse 29 unmittelbar zur Bildung von Gleitlagerflächen zusammenwirken. Die Halteringe 25, 26 sind aus gehärtetem Stahl oder hartmetall- bzw. keramikbeschichtetem Stahl ausgeführt. Bei der im unteren Teil der Fig. 3 dargestellten Ausführung sind separate Axiallagerringe 32, 33 in die Halteringe 27, 28 eingesetzt. Auch sie bilden zusammen mit den Stirnflächen der Lagerbuchse 29 axiale Gleitlagerflächen.

Die Dimensionierung der Lagerspiele zwischen den axialen Stirnflächen erfolgt in der Art, daß auch bei den maximal auftretenden Betriebstemperaturen eine problemlose Verschiebung des durch ein federndes Element 20 beaufschlagten Halteringes 25 bzw. 27 und der Lagerhülse 13 zum Ausgleich der temperaturbedingten Ausdehnungen möglich ist. Diese für das einwandfreie Funktionieren des Ausgleichs notwendige Randbedingung hat zwar eine geringfügige Varianz in der axialen Position der Welle zur Folge, was sich jedoch auf den Betrieb der Spaltrohrmotorpumpe nicht negativ auswirkt.

Um auch Axialkräfte in beiden Richtungen aufnehmen zu können, ist die Federkraft des federnden Elementes 20 so dimensioniert, daß die von ihm ausgeübte Kraft stets größer ist als die zu übertragende Axialkraft.

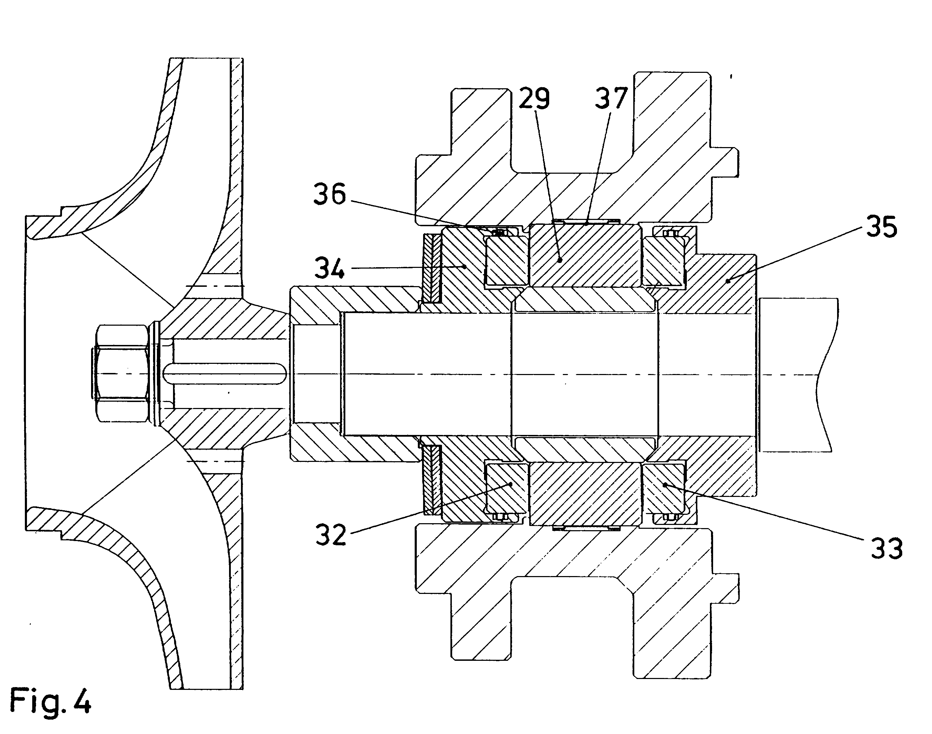

Die in der Fig. 4 dargestellte Gleitlageranordnung, die weitgehend der Gleitlagerung im unteren Teil der Fig. 3 entspricht, ist für den Einsatz bei Betriebstemperaturen über 250 °C vorgesehen. Bei solch hohen Temperaturen entstehen zwischen den Axiallagerringen 32, 33 und den Halteringen 34, 35 sowie zwischen der Lagerbuchse 29 und der Laterne 3 relativ große Dehnungsdifferenzen, da für die genannten Teile Werkstoffe mit stark unterschiedlichen Ausdehnungskoeffizienten eingesetzt werden. Um eine kraftschlüssige Verbindung zwischen diesen Bauteilen allein durch eine Preßverbindung auch bei hohen Betriebstemperaturen zu gewährleisten, müßte die Preßverbindung mit entsprechend großen Übermaßen bei Raumtemperatur ausgelegt werden. Derartige Preßverbindungen überschreiten jedoch im allgemeinen die zulässige elastische Verformungsgrenze aller verwendbaren Stähle. Mit Hilfe von Federelementen, die zwischen den jeweils miteinander verbundenen Bauteilen eingesetzt werden, lassen sich aber auch größere Dehnungsdifferenzen überwinden, ohne daß sich eine Lockerung in den jeweiligen Verbindungen ergibt. So erfolgt bei der Gleitlagerung der Fig. 4 die Befestigung der Axiallagerringe 32, 33 durch radial angeordnete Federelemente 36, während zur Befestigung der Lagerbuchse 29 ein radial angeordnetes Federelement 37 dient. Die Federelemente 36, 37 bestehen vorzugsweise aus Wellfedern oder Toleranzringen.

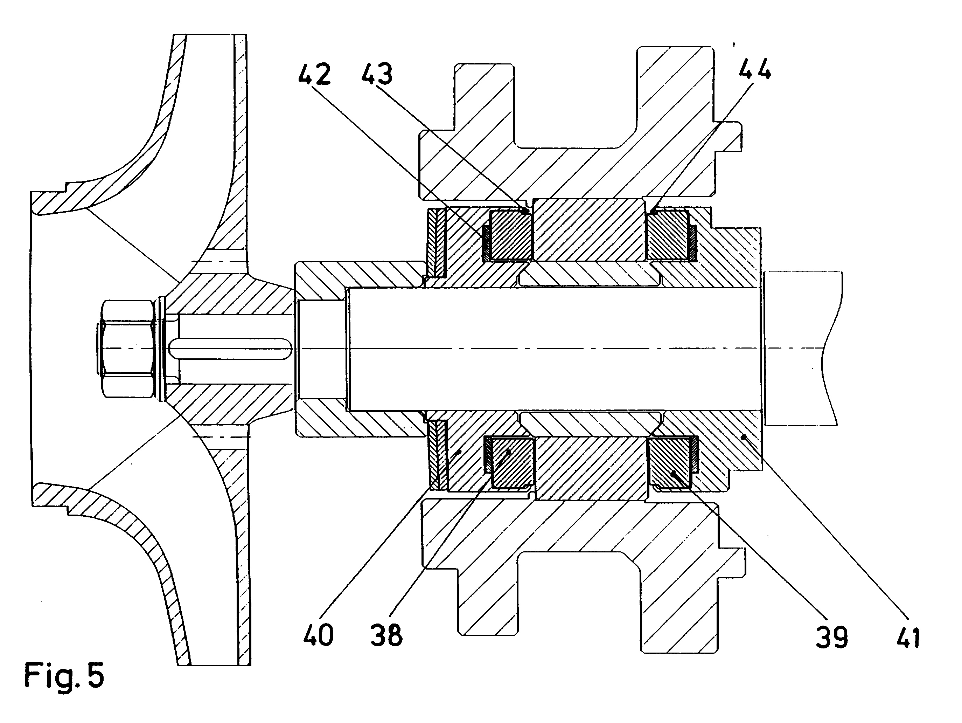

Auch die in der Fig. 5 dargestellte Gleitlagerung entspricht weitgehend der Gleitlagerung im unteren Teil der Fig. 3. Die Axiallagerringe 38, 39 dieser Ausführung sind jedoch mit radialem Spiel an ihrem inneren und ihrem äußeren Umfang in die Halteringe 40, 41 eingesetzt. Zwischen den Axiallagerringen 38, 39 und den Halteringen 40, 41 sind axial Federelemente 42 so angeordnet, daß deren Kraftangriff am äußeren Radius erfolgt und infolgedessen die Axiallagerringe 40, 41 jeweils durch eine überwiegend axial wirkende Kraft belastet werden. Auch die Federelemente 42 sind so dimensioniert, daß die von ihnen ausgeübte Kraft stets größer ist als die zu übertragende Axialkraft. Um eine sichere Fixierung der Axiallagerringe 38, 39 in den Halteringen 40, 41 zu gewährleisten, werden die äußeren Halteringränder 43, 44 nach der Montage der Axiallagerringe 38, 39 und der Federelemente 42 umgebördelt.

Die Axiallagerringe 38, 39 sind aufgrund des an ihrem inneren und ihrem äußeren Umfang vorhandenen Spiels in ihrer Winkeleinstellung veränderbar. Hierdurch wird eine Kompensation des Einflusses von Wellendurchbiegungen bei extremen Betriebszuständen ermöglicht, wobei dennoch der Forderung nach einem kompakten Bauteil und einfacher Montage der Gleitlagerung entsprochen wird.

Für den sicheren Betrieb von Gleitlagerungen ist eine ausreichende Kühlung der Gleitflächen durch Zuführung eines Kühlstromes und die Vermeidung einer Ansammlung von Gasblasen an den Gleitflächen, die zum Trockenlauf und damit zu einem vorzeitigen Verschleiß der Gleitlagerungen führen würden, von wesentlicher Bedeutung.

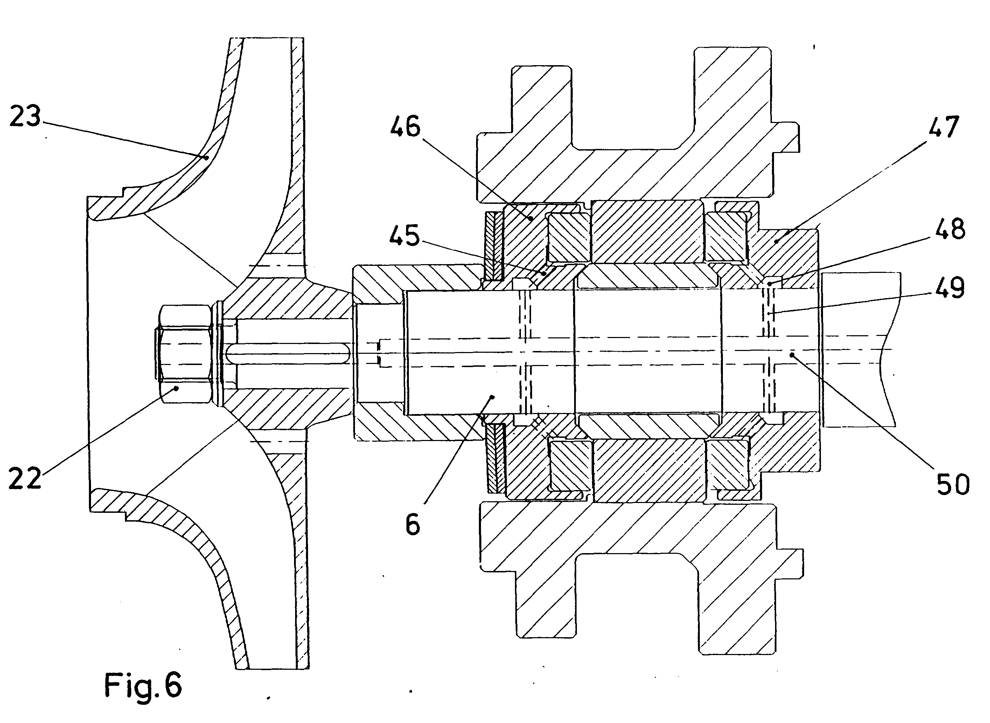

In der Fig. 6 ist eine Ausführung dargestellt, die den genannten Anforderungen auch unter extremen Bedingungen zu entsprechen vermag. Die in ihrem grundsätzlichen Aufbau dem unteren Teil der Fig. 3 entsprechende Ausführung ist zusätzlich mit einem Bohrungssystem ausgestattet, über welches ein radial einwärts gerichteter Kühlstrom in den Saugbereich des Laufrades 23 geführt wird. Mit diesem Kühlstrom werden auch etwa vorhandene Gasblasen abgeführt. Die Führung des Kühlstroms erfolgt über Bohrungen 45 in den Halteringen 46, 47, jeweils eine am inneren Radius eines Halteringes 46, 47 umlaufende Nut 48, radiale Bohrungen 49 in der Welle 6 und eine zentrale Axialbohrung 50, die im Bereich der Laufradmutter 22 mündet.

Die in der Fig. 6 dargestellte Ausführung kann auch in einer geeigneten Weise abgewandelt werden. Wesentlich ist allein, daß ein Kreislauf über die Gleitflächen der Gleitlagerung und ein Bohrungs- bzw. Kanalsystem in den Halteringen 46, 47 und der Welle 6 geführt wird. Hierfür könnten das Fördermedium und der durch die Pumpe erzeugte Druck oder ein unter Druck eingespeistes Fremdmedium genutzt werden.

## Patentansprüche

1. Gleitlagerung für eine Maschinenwelle, insbesondere für die Rotorwelle (6) einer Spaltrohrmotorpumpe, mit einer feststehenden Lagerbuchse (12) und einer auf der Welle (6) gehalterten, in der Lagerbuchse rotierenden Lagerhülse (13), deren Stirnflächen zumindest zur Teil als nach außen gerichtete Konusflächen (15) ausgebildet sind, wobei die ungeteilte, mit radialem Spiel (14) zur Welle (6) angeordnete Lagerhülse (13) an jeder der beiden Konusflächen (15) durch einen Haltering (18,19; 25,26; 27,28; 34,35; 40,41; 46,47) mit einer zur Konusfläche (15) komplementären Fläche radial und axial zentriert wird, wobei die Halteringe (18,19; 25,26; 27,28; 34,35; 40,41; 46,47) auf der Welle (6) radial zentriert sind, und wobei Mittel vorgesehen sind, die einen Ausgleich der sich bei unterschiedlichen Temperaturen ergebenden Dehnungsunterschiede zwischen Welle (6) und Lagerhülse (13) im Bereich der Halterung der Lagerhülse bewirken, **dadurch gekennzeichnet, daß** mindestens einer von beiden Halteringen (18 o. 19; 25 o. 26; 27 o. 28; 34 o. 35; 40 o. 41; 46 o. 47) axial verschiebbar ist, und daß mindestens auf einer Seite zwischen dem mindestens einem Haltering (18 o. 19; 25 o. 26; 27 o. 28; 34 o. 35; 40 o. 41; 46 o. 47) und einer axialen Befestigung (21) ein Federelement (20) zur Ausübung einer axial in Richtung der Lagerhülse (13) wirkenden Kraft vorgesehen ist.

2. Gleitlagerung nach Anspruch 1, dadurch gekennzeichnet, daß der zur Wellenachse (16) gebildete Winkel (a) einer Konusfläche (15) zwischen 30 ° und 60 ° beträgt.

3. Gleitlagerung nach Anspruch 1, dadurch gekennzeichnet, daß die feststehende Lagerbuchse (29) zusätzlich zur radialen Gleitlagerfläche zwei axiale Gleitlagerflächen besitzt, während die Halteringe (25,26; 27,28; 34,35; 40,41; 46,47) eine maximal bis zum äußeren Rand der Lagerbuchse (29) reichende radiale Erstreckung aufweisen und mit axialen Gleitlagerflächen ausgestattet sind, die mit der axialen Gleitlagerfläche der Lagerbuchse (29) korrespondieren.

4. Gleitlagerung nach Anspruch 3, dadurch gekennzeichnet, daß die axiale Gleitlagerfläche eines Halterings (27,28; 34,35; 40,41; 46,47) durch einen separaten, in den Haltering (27,28; 34,35; 40,41; 46,47) integrierten Axiallagerring (32,33; 38,39) gebildet wird.

5. Gleitlagerung nach Anspruch 4, dadurch gekennzeichnet, daß die Lagerbuchse (29) und die Axiallagerringe (32,33) durch radial angeordnete Federelemente (36,37) fixiert werden.

6. Gleitlagerung nach Anspruch 4, dadurch gekennzeichnet, daß jeder Axiallagerring (38,39) winkelverstellbar gehaltert ist, wobei der Axiallagerring (38 bzw. 39) durch eine im Haltering (40 bzw. 41) angeordnete Feder (42) axial belastet und durch eine durch Umformen des Randes des Halteringes (40 bzw. 41) erzeugte Bördelung (43 bzw. 44) im Haltering (40 bzw. 41) fixiert wird.

7. Gleitlagerung für die Rotorwelle einer Spaltrohrmotorpumpe nach einem der vorhergehenden Ansprüche, dadurch gekennzeichnet, daß in jedem Haltering (46,47) eine oder mehrere Bohrungen (45) angeordnet sind, welche eine Verbindung herstellen zwischen dem mit Fluid gefüllten Raum im Bereich der Gleitlagerflächen und einer am inneren Radius des Halteringes (46 bzw. 47) umlaufenden Nut (48), die ihrerseits eine oder mehrere in der Welle (6) angeordnete Bohrungen (49) umschließt, welche in eine zum Pumpenraum (4) der Spaltrohrmotorpumpe führende Axialbohrung (50) münden.

8. Gleitlagerung nach Anspruch 1, dadurch gekennzeichnet, daß als federndes Element (20) eine oder eine Anordnung von mehreren Tellerfedern verwendet wird.

9. Gleitlagerung nach einem der vorhergehenden Ansprüche, dadurch gekennzeichnet, daß die feststehende Lagerbuchse (12,29), die rotierende Lagerhülse (13) und die in den Halteringen (27,28; 34,35; 40,41; 46,47) installierten Axiallagerringe (32,33; 38,39)aus keramischen Werkstoffen, vorzugsweise aus Siliziumcarbid, bestehen.

10. Gleitlagerung nach einem der vorhergehenden Ansprüche, dadurch gekennzeichnet, daß die feststehende Lagerbuchse (12,29) aus Kohle und die rotierende Lagerhülse (13) sowie die Halteringe (25,26) aus gehärtetem Stahl oder hartmetall-/keramikbeschichtetem Stahl bestehen.

## Claims

1. Slide bearing for a machine shaft, in particular for the rotor shaft (6) of a canned motor pump, having a fixed bearing bush (12) and a bearing sleeve (13), which is held on the shaft (6) and rotates in the bearing bush and whose end faces are at least partly constructed as outwardly directed conical surfaces (15), the solid bearing sleeve (13), which is arranged with radial play (14) relative to the shaft (6), being centred on each of the two conical surfaces (15) by means of a retaining ring (18, 19; 25, 26; 27, 28; 34, 35; 40, 41; 46, 47) radially and axially with a surface which is complementary to the conical surface (15), the retaining rings (18, 19; 25, 26; 27, 28; 34, 35; 40, 41; 46, 47) being radially centred on the shaft (6), and means being provided which balance differential expansions, resulting in the case of different temperatures, between the shaft (6) and bearing sleeve (13) in the region of the holder of the bearing sleeve, characterized in that at least one of the two retaining rings (18 or 19; 25 or 26; 27 or 28; 34 or 35; 40 or 41; 46 or 47) can be displaced axially, and in that at least on one side between the at least one retaining ring (18 or 19; 25 or 26; 27 or 28; 34 or 35; 40 or 41; 46 or 47) and an axial fastening (21) a spring element (20) is provided for exerting a force acting axially in the direction of the bearing sleeve (13).

2. Slide bearing according to Claim 1, characterized in that the angle (a), formed relative to the shaft axis (16), of a conical surface (15) is between 30° and 60°.

3. Slide bearing according to Claim 1, characterized in that the fixed bearing bush (29) has two axial slide bearing surfaces in addition to the radial slide bearing surface, while the retaining rings (25, 26; 27, 28; 34, 35; 40, 41; 46, 47) have a radial extent which reaches at most up to the outer rim of the bearing bush (29) and are fitted with axial slide bearing surfaces which correspond to the axial slide bearing surface of the bearing bush (29).

4. Slide bearing according to Claim 3, characterized in that the axial slide bearing surface of a retaining ring (27, 28; 34, 35; 40, 41; 46, 47) is formed by a separate axial bearing ring (32, 33; 38, 39) integrated in the retaining ring (27, 28; 34, 35; 40, 41; 46, 47).

5. Slide bearing according to Claim 4, characterized in that the bearing bush (29) and the axial bearing rings (32, 33) are fixed by means of radially arranged spring elements (36, 37).

6. Slide bearing according to Claim 4, characterized in that each axial bearing ring (38, 39) is held in an angularly adjustable fashion, the axial bearing ring (38 or 39) being axially loaded by a spring (42) arranged in the retaining ring (40 or 41) and fixed in the retaining ring (40 or 41) by a beading (43 or 44) produced by reshaping the rim of the retaining ring (40 or 41).

7. Slide bearing for the rotor shaft of a canned motor pump according to one of the preceding claims, characterized in that arranged in each retaining ring (46, 47) are one or more bores (45) which make a connection between the space filled with the fluid in the region of the slide bearing surfaces and a groove (48) which runs around at the inner radius of the retaining ring (46 or 47) and for its part encloses one or more bores (49) which are arranged in the shaft (6) and open into an axial bore (50) leading to the pump chamber (4) of the canned motor pump.

8. Slide bearing according to Claim 1, characterized in that a disc spring or an arrangement of a plurality of disc springs is/are used as spring element (20).

9. Slide bearing according to one of the preceding claims, characterized in that the fixed bearing bush (12, 29), the rotating bearing sleeve (13) and the axial bearing rings (32, 33; 38, 39) installed in the retaining rings (27, 28; 34, 35; 40, 41; 46, 47) consist of ceramic materials, preferably of silicon carbide.

10. Slide bearing according to one of the preceding claims, characterized in that the fixed bearing bush (12, 29) consists of carbon, and the rotating bearing sleeve (13) and the retaining rings (25, 26) consist of hardened steel or steel coated with hard metal/ceramic.

## Revendications

1. Palier à glissement pour un arbre de machine, en particulier pour l'arbre de rotor (6) d'une pompe à moteur à gaine, avec un coussinet fixe (12) et une douille-palier (13) tournant dans le coussinet, supportée sur l'arbre (6), dont les faces frontales sont conçues au moins en partie sous la forme de faces coniques (15) orientées vers l'extérieur, la douille-palier (13) d'une pièce, disposée avec un jeu radial (14) par rapport à l'arbre (6) étant centrée radialement et axialement sur chacune des deux faces coniques (15) par une bague de retenue (18, 19; 25, 26; 27, 28; 34, 35; 40, 41; 46, 47) avec une face complémentaire à la face conique (15), les bagues de retenue (18, 19; 25, 26; 27, 28; 34, 35; 40, 41; 46, 47) étant centrées radialement sur l'arbre (6), et des moyens étant prévus pour causer un équilibrage des différences de dilatation se présentant à différentes températures entre l'arbre (6) et la douille-palier (13) dans la zone du support de la douille-palier, **caractérisé en ce qu'**au moins une des deux bagues de retenue (18 ou 19; 25 ou 26; 27 ou 28; 34 ou 35; 40 ou 41; 46 ou 47) peut être déplacée axialement et en ce qu'au moins d'un côté entre l'au moins une bague de retenue (18 ou 19; 25 ou 26; 27 ou 28; 34 ou 35; 40 ou 41; 46 ou 47) et une fixation axiale (21) un élément à ressort (20) est prévu pour exercer une force agissant axialement dans la direction de la douille-palier (13).

2. Palier à glissement selon la revendication 1, caractérisé en ce que l'angle (a) d'une surface conique (15) formé avec l'axe de l'arbre (16) est compris entre 30° et 60°.

3. Palier à glissement selon la revendication 1, caractérisé en ce que le coussinet fixe (29) possède, en plus des faces de palier à glissement radiales, deux faces de palier à glissement axiales, tandis que les bagues de retenue (25, 26; 27, 28; 34, 35; 40, 41; 46, 47) présentent une dimension radiale maximale allant jusqu'au bord extérieur du coussinet (29) et sont munies de faces de palier à glissement axiales, qui correspondents aux faces de palier à glissement axiales du coussinet (29).

4. Palier à glissement selon la revendication 3, caractérisé en ce que la face de palier à glissement radiale d'une bague de retenue (27, 28; 34, 35; 40, 41; 46, 47) est formée par une bague de palier axiale (32, 33; 38, 39) séparée, intégrée à la bague de retenue (27, 28; 34, 35; 40, 41; 46, 47) .

5. Palier à glissement selon la revendication 4, caractérisé en ce que le coussinet (29) et les bagues de palier axiales (32, 33) sont fixés par des éléments à ressort (36, 37) disposés radialement.

6. Palier à glissement selon la revendication 4, caractérisé en ce que chaque bague de palier axiale (38, 39) est supportée de manière ajustable angulairement, la bague de palier axiale (38 ou 39) étant chargée axialement par un ressort (42) disposé dans la bague de retenue (40 ou 41) et étant fixée dans la bague de retenue (40 ou 41) par une bordure (43 ou 44) produite par une déformation du bord de la bague de retenue (40 ou 41).

7. Palier à glissement pour l'arbre de rotor d'une pompe à moteur à gaine, selon l'une quelconque des revendications précédentes, caractérisé en ce que dans chaque bague de retenue (46, 47) sont disposés un ou plusieurs alésages (45), qui établissent une connexion entre la chambre remplie de fluide dans la zone des faces de palier à glissement et une rainure périphérique (48) sur le rayon interne de la bague de retenue (46 ou 47), laquelle entoure à son tour un ou plusieurs alésages (49) disposés dans l'arbre (6), lesquels alésages débouchent dans un alésage axial (50) conduisant à la chambre de pompage (4) de la pompe à moteur à gaine.

8. Palier à glissement selon la revendication 1, caractérisé en ce qu'on utilise en tant qu'élément à ressort (20) un ressort Belleville ou un ensemble de plusieurs ressorts Belleville.

9. Palier à glissement selon l'une quelconque des revendications précédentes, caractérisé en ce que le coussinet fixe (12, 29), les douilles-palier (13) rotatives et les bagues de palier axiales (32, 33; 38, 39) installées dans les bagues de retenue (27, 28; 34, 35; 40, 41; 46, 47) se composent de matériaux céramiques, de préférence de carbure de silicium.

10. Palier à glissement selon l'une quelconque des revendications précédentes, caractérisé en ce que le coussinet fixe (12, 29) se compose de charbon er la douille - palier tournante (13) et les bagues de retenue (25, 26) se composent d'acier trempé ou d'acier enduit de métal dur/céramique.
